# EUROPEAN PATENT SPECIFICATION

(11) **EP 4 488 112 B1**
(45) Date of publication and mention of the grant of the patent: **10.12.2025**
(21) Application number: 24178474.3
(22) Date of filing: 28.05.2024
(51) Int. Cl.: B60N 2/30

(54) **STOWABLE SEATING ASSEMBLY FOR A VEHICLE**
VERSTAUBARE SITZANORDNUNG FÜR EIN FAHRZEUG
ENSEMBLE SIEGE ESCAMOTABLE POUR VEHICULE

(30) Priority: 07.07.2023 NL 2035304
(43) Date of publication of application: 08.01.2025
(73) Proprietor: Snoeks Automotive B.V., 2153 NC Nieuw-Vennep (NL)
(72) Inventor: Smit, Kenny, 2153NC Nieuw-Vennep (NL); Rombout, Maurice, 2153NC Nieuw-Vennep (NL); Van Til, Wouter, 2153NC Nieuw-Vennep (NL)
(74) Representative: Arnold & Siedsma

(56) References cited:
- EP-A1- 2 808 199

## Description

The present disclosure relates to a stowable seating assembly for a vehicle, such as a transport vehicle, and a vehicle comprising such assembly.

Small delivery vans or trucks, also known also light commercial vehicles are transport vehicles that are being used to transport cargo. Such vehicles are also known in the art as N category vehicles. Similar vehicles for transporting passengers are also available, which belong to the M category. These vehicles (or vans) can be comprised of a double cabin construction wherein one part of the van is a passenger compartment and the other part is a cargo compartment, and wherein these compartments are being separated by a separation wall separating the cargo from the passengers. Category N are considered motor vehicles with at least four wheels designed and constructed for the carriage of goods, Category M are considered motor vehicles with at least four wheels designed and constructed for the carriage of passengers and comprising no more than eight seats in addition to the driver's seat (i.e., regular passenger cars including SUVs, MPVs, small vans, etc). A sliding door at the side of the vehicle provides access to the passenger compartment. These so called double cabin vehicles may serve to transport goods and at the same time transport a limited number of people. The passenger compartment contains at least two passenger seat assemblies, whereby the front seat assembly is provided for the driver and possibly one or two additional passengers. The rear seat(s) are arranged to be able to further transport three or four passengers, depending on the lay-out of the vehicle. Factory supplied seating constructions are fixed to the floor body of the van for support of the seating, retaining the seats and passengers during an accident, and further durability of the seating construction.

Stowable seating assemblies for vehicles are known in the art. For example, assemblies exist wherein seats are combined with a movable separation wall for separating the passenger and cargo compartments. Another example is a seating assembly that can be folded, to some extent, to stow it away at least partially. Such assemblies fold away (part of) the seating arrangements of the vehicle, such that additional cargo space becomes available. The existing systems have various disadvantages. For instance, such systems are difficult to integrate into smaller vehicles, such as smaller transport vehicles, due to bulky stowing mechanisms that may require several guiding means such as rails and the like. Further, the installation of such systems generally requires significant modification of the base vehicle as such systems are generally retrofitted, which in turn influences on-board systems such as lighting, airbags, electric lines, communication lines, structural reinforcement elements, support elements, mounting points, et cetera.

The EP 2808199 shows a folding seat for a vehicle cabin comprising a plurality of hinge pins. It is an object of the present disclosure, amongst other objects, to mitigate at least part of the aforementioned disadvantages of the prior art.

In view thereof, according to a first aspect of the disclosure, a stowable seating assembly in accordance with features of claim 1 is provided.

The brace optionally comprises a separation panel that is configured to substantially extend between the top portion of the backrest portion and the roof of the vehicle, in both the seating position and the stowing position of the assembly, so as to form a barrier between a rear side of the assembly and a front side of the assembly.

The assembly according to the first aspect advantageously has two main connection points to the vehicle, on the floor and on the roof (i.e., on the ceiling). Particularly, the base of the assembly is connected to the floor of the vehicle, and the support element is connected to the roof. The assembly remains connected to these two connection points both in the seating position and the stowing position thereof. This relatively simple construction allows for the assembly to be fitted to a variety of vehicles, and particularly makes it suitable for smaller transport vehicles (e.g., smaller light commercial vehicles). Specifically, the lack of a need for sliding rails or other bulky mounting means in the floor and/or roof of the vehicle makes the assembly suitable for vehicles with a limited amount of interior space, and more in particular vehicles with a limited amount of interior height.

Furthermore, the vehicle fitted with the present assembly does not require significant modification, such that the existing on-board systems are minimally affected. For instance, it was found that airbag functionality can remain intact (unaltered) when installing the present assembly, both in the stowing position and the seating position of the assembly.

Generally, a transport vehicle has a cargo compartment and a passenger compartment. The passenger compartment provides seating and space for at least the driver of the transport vehicle and the required control elements that must be controlled by the driver (e.g., steering wheel, acceleration and braking pedals, et cetera). In the case of a double cabin transport vehicle, a second (or third, or further) row of seats is provided behind the seats of the driver in order to accommodate more passengers. The cargo compartment is located behind the most rearward seats, and provides space for transporting cargo, such as tools, packages, et cetera. For these types of vehicles it is of importance that the cargo and passenger compartments of the vehicle are separated for safety reasons. Accordingly, a separation assembly is required that extends from the floor of the vehicle to the roof of the vehicle, such that items in the cargo compartment cannot make their way into the passenger compartment, for example in the case of a collision. A main advantage of a stowable seating assembly is that a row of passenger seating can be sacrificed for additional cargo space in the cargo compartment. However, this means that the seating assembly should also function as a sufficiently strong separation assembly. In turn, this means that the assembly should extend from the floor of the vehicle to the roof both in the seating position and the stowing position thereof. The present assembly accommodates therefor by providing the brace, connected to the top portion of the backrest, that is pivotable with the aid of the guiding link, that is pivotable to both the brace and support element on the ceiling of the vehicle. In essence, the guiding link makes it possible to simultaneously fold the brace down and moving it in the forward direction of the vehicle when the assembly is moved from the seating position to the stowing position, whilst maintaining the same support location on the ceiling of the vehicle through the support element. Hence, this enables the assembly to function without bulky guiding rails that also require more maintenance than a single pivot point such as provided by the present support element. Preferably, the first and second pivot points define first and second pivot axes that are preferably parallel to each other.

Accordingly, the present assembly successfully mitigate at least part of the aforementioned disadvantages of the prior art.

Preferably, in the assembly of the first aspect, the locking mechanism comprises at least one of:
- a seating position lock comprising a first latch mechanism configured to be fixed to one of the vehicle, preferably the floor thereof, and the seating frame, preferably the seat portion thereof, and is configured to engage with a first locking element configured to be fixed to the other one of the vehicle, preferably the floor thereof, and the seating frame, preferably the seat portion thereof, so as to prevent pivoting of the seat portion about the first pivot point, and
- a stowing position lock comprising a second latch mechanism fixed to one of the seat portion and the backrest portion and being configured to engage with a second locking element fixed to the other one of the seat portion and the backrest portion, so as to prevent pivoting of the seat portion and the backrest portion relative to each other about the second pivot point.

The seating position lock is configured to lock the assembly in its seating position. In other words, the seating position locks prevents relative pivoting motion between the various components of the assembly when in the seating position. Similarly, the stowing position lock is configured to lock the assembly in its stowing position. In other words, the stowing position lock prevents relative pivoting motion between the various components of the assembly when in the stowing position.

When moving the assembly from the stowing position to the seating position, the seat portion of the seating frame is moved towards the floor of the vehicle, such that the floor of the vehicle is a suitable location for the first locking element or the first latch mechanism. Alternatively, such first locking element or first latch mechanism could be mounted to other bodywork parts of the vehicle, such as the interior sides, such as on the C-pillar of the vehicle. When the first latch mechanism is fixed to the seat portion in a preferred example, the base and the connection between the first locking element and the first latch mechanism provide two mounting points for the seat portion, thus preventing rotational movement of the seat portion in the relevant rotational directions, particularly the components are placed such that rotational movement about the first pivot point is prevented.

When moving the assembly from the seating position to the stowing position, the angle between the seat portion and the backrest portion of the seating frame changes. Specifically, the preferred aim is to position the backrest portion and the seat portion substantially in line with each other, such that both are substantially oriented along a vertical direction. This change is relative orientation can be used by the stowing position lock, to lock the seating assembly in the desired orientation in the stowing position of the assembly. For instance, moving the assembly from the seating position to the stowing position rotates the second latch mechanism and the second locking element towards each other, wherein both engage with each other when the stowing position is reached, thereby preventing rotational movement of the seat portion and the backrest portion with respect to each other. It may be sufficient to rotationally lock the seat portion and backrest portion with respect to each other to prevent also any significant pivoting of the other components of the assembly, such as the brace and the guiding link.

Preferably, the locking mechanism is provided with a plurality of first latch mechanisms and a corresponding plurality of first locking elements, and/or a plurality of second latch mechanisms and a corresponding plurality of second locking elements.

Preferably, in the assembly of the first aspect, in the seating position of the assembly, the first latch mechanism is engaged with the first locking element, and preferably the second latch mechanism is not engaged with the second locking element. In other words, preferably separate latch mechanisms are provided for the seating position and the stowing position.

Preferably, in the assembly of the first aspect, in the stowing position of the assembly, the second latch mechanism is engaged with the second locking element, and preferably the first latch mechanism is not engaged with the first locking element. In other words, preferably separate latch mechanisms are provided for the seating position and the stowing position.

Preferably, in the assembly of the first aspect, the brace comprises a separation panel that substantially extends between the top portion of the backrest portion and the roof of the vehicle, in both the seating position and the stowing position of the assembly, so as to form a barrier between a rear side of the assembly and a front side of the assembly. The separation panel may be formed integrally with the brace. In other words, the separation panel and the brace may be integrated with each other to form a single component. It is preferred that the brace comprises a bracket that is hingedly connected to the top portion of the backrest portion of the seating frame. The bracket may be substantially U-shaped when viewed from the back of the assembly in the seating position thereof, wherein each leg of the U-shape is hingedly connected to a pivot point on the top portion of the backrest portion, particularly near the corners between the top portion of the backrest portion and the side portions of the backrest portion. The separation panel may be provided within the perimeter of the bracket. The bracket preferably extends from the top portion of the backrest portion, towards the ceiling of the vehicle, across substantially the entire width of the vehicle's interior, so as to form a barrier between the backrest portion, roof/ceiling of the vehicle, and the sides of the vehicle. The brace and/or separation panel are preferably shaped such that, in the stowing position, the brace and/or separation panel still sufficiently provide a barrier between the top portion of the backrest portion and the ceiling of the vehicle. For instance, the brace and/or separation panel may be curved or bent. Preferably, the brace and/or separation panel is bent near the pivot axis defined by the pivot point between the guiding link and the brace. Preferably, the separation panel is at least partially made of glass or acrylic. Accordingly, the separation panel is transparent such that a driver of the vehicle may utilize the rearview mirror to look from the passenger compartment, through the cargo compartment, and possibly out of a back window of the vehicle.

Preferably, the guiding link is pivotally connected to the brace at a location between a top portion of the brace and a bottom portion of the brace, preferably the location being approximately in the middle between the top portion and bottom portion of the brace, so as to facilitate a smooth movement of the assembly from the seating position to the stowing position.

Preferably, the guiding link and the brace comprise blocking means configured to block movement of the guiding link and the brace with respect to each other in the stowing position of the assembly.

It is preferred that the blocking means comprise a latching pin connected with one of the guiding link and the brace, and a latching hook connected with the other one of the guiding link and the brace, wherein the latching hook is configured to engage with the latching pin in the stowing position of the assembly. The latching hook is preferably connected with the brace. Preferably, the latching hook is pivotable between a locked position, wherein the latching hook engages with the latching pin in the stowing position of the assembly, and an unlocked position wherein the latching hook does not engage with the latching pin in the stowing position of the assembly. Preferably, in the locked position of the latching hook, the latching hook remains engaged with the latching pin at least partially due to weight of the brace, i.e., under the influence of gravity. Accordingly, the latching hook can be disengaged with the latching pin by pushing the brace upwards, i.e., pressing against the force of gravity. Preferably, the blocking means are provided at each side of the assembly, such that the blocking means can be locked and unlocked from both sides of the assembly, and thus the vehicle in which it may be installed.

Alternatively or additionally, the blocking means may comprise a latching clamp connected with one of the guiding link and the brace, wherein the latching clamp is configured to snap-fit to the other one of the guiding link and the brace in the stowing position of the assembly. For instance, the latching clamp is connected with the brace and is configured to snappingly engage with the guiding link in the stowing position of the assembly. In this case, the latching clamp may for instance be a tube clamp that is configured to snap or click around part of the circumference of the guiding link. The snapping engagement (or snap-fit) may be achieved by allowing the clamp to elastically deform upon engagement with the guiding link or the brace, to let the guiding link or the brace pass an entry point of the clamp, after which the clamp springs back to its original shape which partially makes the clamp enclose the guiding link or the brace. Disengagement of the clamp may also be achieved by the opposite motion, i.e., by pulling the clamp away from the guiding link or the brace, letting it elastically deform to pass the entry point of the clamp in the opposite direction.

Preferably, in the assembly of the first aspect, the first pivot point is located near a front section of the seat portion, and the first latch mechanism or the first locking element is fixed to the seat portion near a rear section of thereof. Accordingly, when moving the assembly from the seating position to the stowing position, the seat portion is pivoted about the first pivot point from a mostly horizontal orientation (suitable for seating a person) to a mostly vertical position, thus freeing up space in the front-aft direction of the vehicle.

Preferably, in the assembly of the first aspect, in the seating position of the assembly, the seat portion and the backrest portion are oriented such that a person can be seated thereon, preferably wherein the seat portion and the backrest portion define a seat angle between them, wherein the seat angle is in the range of 60 to 130 degrees.

Preferably, in the assembly of the first aspect, in the stowing position of the assembly, the seat portion and the backrest portion are oriented such that both are positioned substantially vertically, preferably wherein the seat portion and the backrest portion define a seat angle between them, wherein the seat angle is in the range of 160 to 200 degrees. In other words, in the stowing position of the assembly, the seat portion and the backrest portion are mostly in line with each other, preferably along a vertical direction so as to free up the maximum amount of space in the front-aft direction of the vehicle, whilst still providing a barrier between the passenger and cargo compartments of the vehicle.

Preferably, in the assembly of the first aspect, the seating position lock further comprises a third latch mechanism configured to be fixed to one of the vehicle and the seating frame, preferably to the backrest portion thereof, and is configured to engage with a third locking element fixed to the other one of the vehicle and the seating frame, preferably to the backrest portion thereof. Optionally, the third latch mechanism has a receiving portion for receiving the third locking element therein in the seating position of the assembly, the receiving portion comprising at least one hook portion configured to catch the third locking element when the third locking element slides forwards and/or backwards in said receiving portion, preferably wherein the receiving portion comprises two hook portions, wherein a first hook portion of the two hook portions is configured to catch the third locking element when the third locking element slides forwards in said receiving portion, and a second hook portion of the two hook portions is configured to catch the third locking element when the third locking element slides backwards in said receiving portion. Preferably, the seating position lock comprises a plurality of third latch mechanisms and a corresponding plurality of third locking elements. Preferably, a third latch mechanism and third locking element are provided at each side of the assembly, preferably such that the third latch mechanism or the third locking element are provided near or on the C-pillars on opposite sides of the vehicle.

The third latch mechanism may be a passive latch mechanism in the sense that it cannot be locked. In other words, in this case the third locking element lies freely in the receiving portion of the third latch mechanism. The receiving portion may be formed such that the third locking element can move freely in and out of the receiving portion, so as to facilitate movement of the assembly from the seating position to the stowing position and vice versa. The passive latch mechanism comes into play in the case of a collision of the vehicle. For instance, forces during a frontal impact of the vehicle may cause the assembly to move and/or deform in the forward direction. In this case, the third locking element slides forward in the receiving portion, until it collides with the hook portion of the receiving portion. In other words, the hook portion catches the third locking element in case of an impact, such that the forces of the impact may be dissipated partially through the third latch mechanism to the bodywork of the vehicle, thereby preventing damage to the assembly to a certain degree which benefits the safety of the passengers seated on the seating frame of the assembly. Thereby, the hook portion forms a safety catch in case of a collision. Another hook portion may be provided in the rearward direction, as noted above, in the case of a collision that causes the assembly to shift rearwards. The locking element may be provided with side braces that contact the third latch mechanism in case of sidewards movement, e.g., during a side collision.

Preferably, in the assembly of the first aspect, the third locking element or the third latch mechanism is fixed to the vehicle through a support brace configured to transfer forces on said third locking element or third latch mechanism to bodywork of the vehicle. Optionally, the support brace is configured to be connected to the bodywork of the vehicle at a plurality of locations, preferably wherein the plurality of locations are pre-existing mounting locations on the bodywork. Further optionally, the support brace is placed between an interior bodywork panel and an exterior bodywork panel of the bodywork of the vehicle. Further preferably, a least one of the plurality of locations is located on the C-pillar or the D-pillar of the vehicle. The support braces thus provides additional paths for dissipating forces, which may benefit the structural integrity of the assembly and/or vehicle in case of an impact. Placing the support brace under interior bodywork prevents the support brace from taking up interior space so as to maximize cargo space. Bodywork of vehicles can be manufactured with several mounting points, i.e., pre-existing mounting locations, for retrofitting equipment. These may be utilized by the support brace in one or more locations thereby providing several paths for dissipating forces.

Preferably, the assembly of the first aspect further comprises a release mechanism for releasing the locking mechanism, preferably wherein the release mechanism comprises a handle which is operable by a user. Optionally, the release mechanism comprises a rod connected to the locking mechanism, wherein the rod can be rotated about its longitudinal axis for locking and/or releasing the locking mechanism, preferably wherein the rod can be rotated by the handle. The locking mechanism, and particularly the latch mechanisms thereof, may comprise a standard jaw latch that allows for the locking elements to be moved into and locked in the latch without operating the jaw of the latch, whilst unlocking (i.e., releasing) the locking element is only possible by releasing the jaw. This allows for locking the assembly in the stowing position or seating position by clicking the locking elements in their corresponding latch mechanisms.

Preferably, in the assembly of the first aspect, the release mechanism is configured for releasing the first latch mechanism and/or the second latch mechanism. Optionally, the release mechanism comprises the handle, and wherein pulling the handle releases at least the first latch mechanism, and also effects the movement of the assembly from the seating position to the stowing position. The handle may be a loop of a certain material that is placed between the seat portion and the backrest portion, wherein pulling the loop releases the latch mechanism(s) and simultaneously enables the seat portion and backrest portion to be pulled in their stowing position.

Preferably, the handle is provided with a contrasting color on a part of the exterior surface of the handle that is only visible when the release mechanism releases the locking mechanism. For instance, in case the handle is a loop, part of the loop that is visible when the locking mechanism is released may have a contrasting color with respect to another part of the loop that is visible both when the locking mechanism is released and when the locking mechanism is locked. Preferably, the contrasting color is red.

Preferably, one or more headrests are provided that are connected to the top portion of the backrest portion. Preferably, the headrests are pivotally connected to said top portion, such that the headrests can be folded downwards when the assembly is moved from the seating position to the stowing position. Preferably, releasing the locking mechanism can also release headrests such that they fold down automatically when the assembly is moved from the seating position to the stowing position.

Preferably, in the assembly of the first aspect, an actuator may be provided to aid in moving the assembly from the seating position to the stowing position. For instance, the actuator may comprise pneumatic or hydraulic cylinders to aid smooth movement between said positions. The actuator may further or additionally comprise springs, pulleys, cables, (electric) motors, et cetera, for additional aid in said movement.

The seating frame may comprise mounting points for safety belt systems. The seating surfaces of the seating frame are preferably provided with a suitable material on which a person may be seated, which provides support and comfort to the person (e.g., any suitable padding). The sides of the seat and backrest portions opposite to the seating surfaces are preferably reinforced in such manner that they can act as separation wall elements that prevent cargo from the cargo compartment from interfering with the passenger compartment. Accordingly, the seating frame can be made of appropriate material of appropriate strength, such as a metal, e.g., steel, or a composite material, e.g., fiber-reinforced plastic such as carbon fiber. The assembly, particularly the safety belt systems and/or seating frame and/or base and/or brace and/or support element and/or locking mechanism and/or guiding link, et cetera, are designed so as to retain passengers and the frame itself in place during frontal impact (e.g., ECE Regulations R14, R94), rear impact (e.g., ECE Regulations R17), and side impact (e.g., ECE Regulations R11, R95).

In the aforementioned seating position of the assembly, the seat and backrest portions of the seating frame are positioned such that a person may be seated on the seating surfaces thereof. Preferably, the seating surface of the seat portion is then facing mainly upwardly, as explained above. The backrest portion is then preferably in an upright position, optionally slightly reclined for comfort. Accordingly, the seat portion is then preferably substantially oriented horizontally, and the backrest portion substantially vertically.

In the aforementioned stowing position of the assembly, the seat and backrest portions are pivoted such that their seating surfaces face forward. This may entail that the seating frame changes from an L-shape in the seating position, to an I-shape in the stowing position. In other words, the seat portion is pivoted from a mainly horizontal orientation to a mainly vertical orientation, whilst the backrest portion remains substantially upright. In the stowing position, the rearward facing side of the backrest portion and the now rearward facing side of the seat portion act as a separation wall between the cargo compartment and the passenger compartment (along with the separation panel).

In a second aspect of the present disclosure, a vehicle is provided, which is preferably a transport vehicle. The vehicle comprises the stowable seating assembly according to the first aspect above. Preferably, the stowable seating assembly is the second seating row of the vehicle. Preferably, the support element is rigidly fixed to the roof of the vehicle, such that the second end of the guiding link pivots relative to the roof of the vehicle, but does not move (i.e., translate) relative to the roof of the vehicle. Further preferably, the base is rigidly fixed to the floor of the vehicle, such that the first pivot point does not move (i.e., translate) relative to the floor of the vehicle.

Preferably, the vehicle of the second aspect is a light commercial vehicle, preferably of the double cabin type wherein the stowable seating assembly is preferably the second or third row of seating of the vehicle, and more preferably wherein the stowable seating assembly is the most rearward row of seating of the vehicle.

In a third aspect of the present disclosure, a stowable seating assembly for a vehicle is provided, the vehicle preferably being a transport vehicle, wherein the assembly comprises a base configured to be fixed to a floor of the vehicle, a seating frame comprising a seat portion and a backrest portion, wherein seat portion is pivotable relative to the base about a first pivot point, and the backrest portion and the seat portion are pivotable relative to each other about a second pivot point, a brace that is pivotally connected to a top portion of the backrest portion, a support element configured to be fixed to the roof of the vehicle, a guiding link that is pivotally connected to both the brace and the support element, and a locking mechanism for locking the assembly in either a seating position or a stowing position, wherein the locking mechanism comprises a (third) latch mechanism configured to be fixed to one of the vehicle and the seating frame, preferably to the backrest portion thereof, and is configured to engage with a (third) locking element fixed to the other one of the vehicle and the seating frame, preferably to the backrest portion thereof.

Preferably, the (third) latch mechanism has a receiving portion for receiving the (third) locking element therein in the seating position of the assembly, the receiving portion comprising at least one hook portion configured to catch the (third) locking element when the (third) locking element slides forwards and/or backwards in said receiving portion. Further preferably, the receiving portion comprises two hook portions, wherein a first hook portion of the two hook portions is configured to catch the (third) locking element when the (third) locking element slides forwards in said receiving portion, and a second hook portion of the two hook portions is configured to catch the (third) locking element when the (third) locking element slides backwards in said receiving portion.

Optionally, the (third) locking element or the (third) latch mechanism is fixed to the vehicle through a support brace configured to transfer forces on said (third) locking element or (third) latch mechanism to bodywork of the vehicle. Preferably, the support brace is configured to be connected to the bodywork of the vehicle at a plurality of locations, preferably wherein the plurality of locations are pre-existing mounting locations on the bodywork, and/or wherein the support brace is placed between an interior bodywork panel and an exterior bodywork panel of the bodywork of the vehicle. Further preferably, a least one of the plurality of locations is located on the C-pillar or the D-pillar of the vehicle.

In a fourth aspect, the (third) latch mechanism of the third aspect as such is foreseen. Preferably, the (third) latch mechanism has a receiving portion for receiving the (third) locking element therein in the seating position of the assembly, the receiving portion comprising at least one hook portion configured to catch the (third) locking element when the (third) locking element slides forwards and/or backwards in said receiving portion. Further preferably, the receiving portion comprises two hook portions, wherein a first hook portion of the two hook portions is configured to catch the (third) locking element when the (third) locking element slides forwards in said receiving portion, and a second hook portion of the two hook portions is configured to catch the (third) locking element when the (third) locking element slides backwards in said receiving portion

The present invention will hereinafter be elucidated by means of illustrative examples with reference to the attached drawings, wherein:
FIG. 1A shows a schematic side view of an exemplary stowable seating assembly in a seating position;
FIG. 1B shows a schematic side view of the stowable seating assembly of FIG. 1A in a stowing position;
FIG. 2 shows a schematic side view of a vehicle equipped with the stowable seating assembly of FIGS. 1A and 1B;
FIG. 3 shows a side view of a vehicle equipped with an exemplary stowable seating assembly in a seating position;
FIG. 4 shows a front view of the vehicle of FIG. 3;
FIG. 5 shows a perspective view of the front of the exemplary stowable seating assembly of the FIGS. 3 and 4;
FIG. 6 shows a perspective view of the rear of the exemplary stowable seating assembly of FIG. 5;
FIG. 7 shows a side view of a vehicle equipped with the exemplary stowable seating assembly of FIGS. 3 - 6 in a stowing position;
FIG. 8 shows a front view of the vehicle of FIG. 7;
FIG. 9 shows a perspective view of the front of the exemplary stowable seating assembly of the FIGS. 7 and 8;
FIG. 10 shows a perspective view of the rear of the exemplary stowable seating assembly of FIG. 9;
FIGS. 11A and 11B show a schematic view of a passive latch and an associated locking element; and
FIG. 12 shows a perspective view of an exemplary seat portion of a seating frame of a stowable seating assembly.

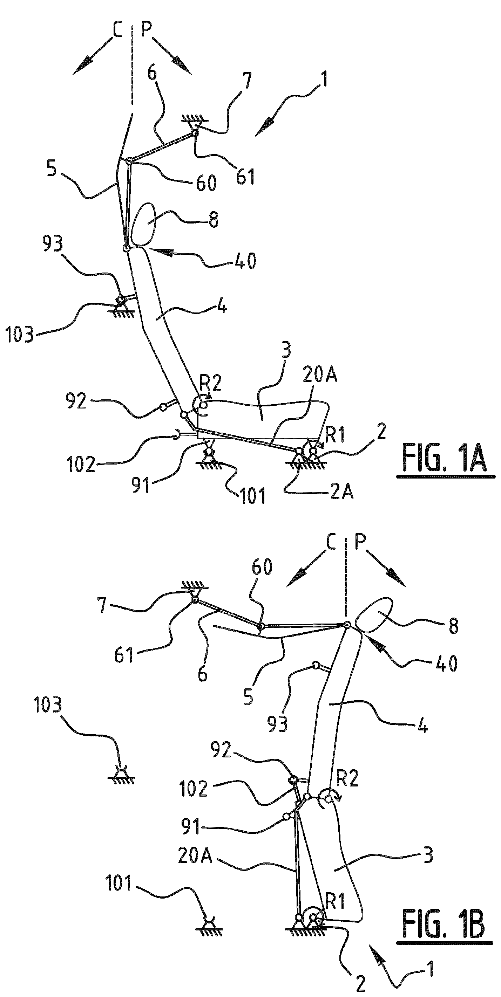

In FIG. 1A a schematic side view of a stowable seating assembly 1 is shown, wherein the assembly 1 is in a seating position suitable for accommodating a person. The assembly 1 comprises a seating frame which has a seat portion 3 and a backrest portion 4. The seat portion 3 is pivotally mounted to a base 2, such that it is rotatable about a first pivot axis R1 (in certain parts referred to as first pivot point). The base 2 is configured to be fixed to an interior floor of a vehicle. The backrest portion 4, also referred to as backrest 4, is pivotally mounted to the seat portion 3, also referred to as seat 3. Accordingly, the backrest 4 is rotatable about a second pivot axis R2 (in certain parts referred to as second pivot point). The backrest 4 is also provided with a headrest 8 that is mounted to a top portion 40 of the backrest 4. Also mounted to said top portion 40, in a pivotable manner, is a separation panel 5. The separation panel 5, also referred to as brace 5, is configured to separate the cargo compartment C of the vehicle from the passenger compartment P, to protect the passengers against items that may move around in the cargo compartment C. A guiding link 6, also referred to as guide rod 6, is pivotally connected to the brace 5 at its first end 60 and pivotally connected to a support element 7 at its second end 61. The support element 7 is configured to be fixed to an interior ceiling (i.e., roof) of a vehicle. The support element 7 preferably comprises a bearing, such as a bushing or ball bearing, where the second end 61 of the guide rod 6 can be rotatably received within. Similarly, the brace 5 comprises a bearing, such as a bushing or ball bearing, where the first end 60 of the guide rod 6 can be rotatably received within. A second base 2A is provided, that is mountable to the floor of the vehicle, wherein a support rod 20A is pivotally connected to the second base 2A and the backrest 4 for additional support.

In the seating position of the assembly 1, as shown in FIG. 1A, a first locking element 91 of the seat 3 is engaged with a first latch mechanism 101 that is configured to be fixed to an interior floor of a vehicle. The locations of the first locking element 91 and the first latch mechanism 101 can also be switched. A second locking element 92 is provided on the backrest 4 and is engageable with a second latch mechanism 102. The locations of the second locking element 92 and the second latch mechanism 102 can also be switched. However, the second locking element 92 and the second latch mechanism 102 are not engaged with each other in the seating position as shown in FIG. 1A. A third locking element 93 is provided on the backrest 4, which is shown as being engaged with a third latch mechanism 103. The locations of the third locking element 93 and the third latch mechanism 103 can also be switched. The engagement of the first locking element 91 with the first latch mechanism 101 and the third locking element 93 with the third latch mechanism 103 locks the assembly 1 in its seating position.

In FIG. 1B the assembly 1 of FIG. 1A is shown in its stowing position. It can be see that the stowing position of the assembly 1 enlarges the cargo compartment C of the vehicle as compared to the seating position, whilst sacrificing the seating for passengers. The assembly 1 can be moved from the seating position (FIG. 1A) to the stowing position (FIG. 1B) by firstly releasing the engagement between the first locking element 91 and the third locking element 93, and the first latch mechanism 101 and the third latch mechanism 103, respectively. After the releasing, the movement to the stowing position can be effected by rotating the seat 3 about the first pivot axis R1. The movement of the components of the assembly 1 are constrained with respect to each other due to the interconnection thereof, as shown, such that rotation of the seat 3 about the first pivot axis R1 automatically effects the movement of the other components (backrest 4, panel 5, guide rod 6) to the shown positions in the stowing position of the assembly 1. Upon reaching the stowing position, the second locking element 92 engages with the second latch mechanism 102 such that the assembly 1 is locked in the stowing position.

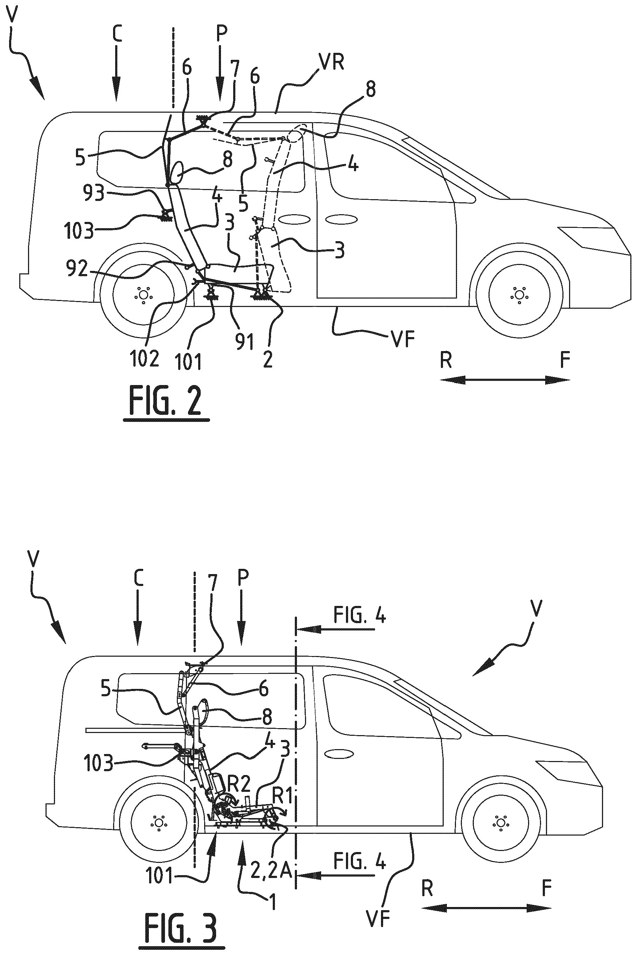

FIG. 2 shows the assembly 1 of FIGS. 1A and 1B provided in a schematically drawn vehicle V. It can be seen that the base 2 of the assembly 1 is fixed to the vehicle floor VF and the support element of the assembly 1 is fixed to the vehicle roof VR. The cargo compartment C and passenger compartment P are indicated with respect to the seating position of the assembly 1 (continuously drawn lines). It can be see that in the stowing position of the assembly 1 (dotted drawn lines) the cargo compartment C is significantly enlarged. Particularly, more room is created in the cargo compartment C by moving the seating in the forward direction F, opposite the rearward direction R of the vehicle V.

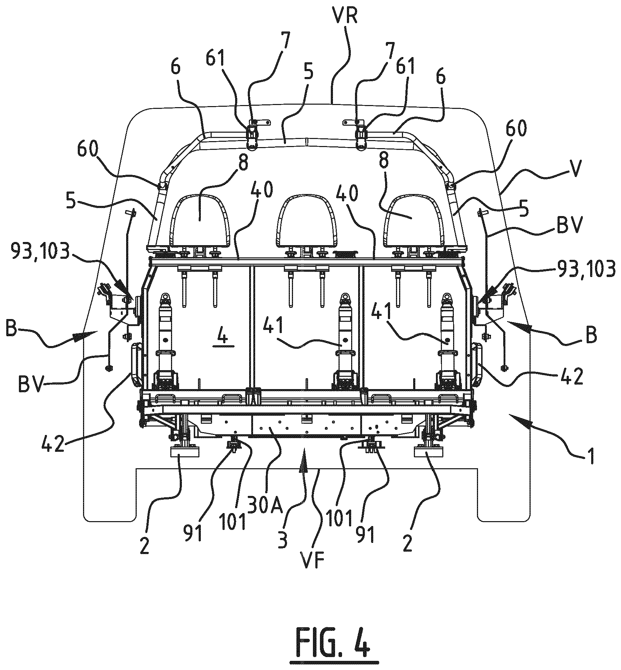

In FIG. 3, a vehicle V is schematically depicted. The vehicle V is equipped with a stowable seating assembly 1, which is depicted here in its seating position. The reference signs correspond to those of FIGS. 1A, 1B and 2. It can be seen that the base 2 and the second base 2A can be integrated into one single constructional element. In FIG. 3 the view of FIG. 4 is indicated, which is a front view of the assembly 1, as seen from within the interior of the vehicle V. In other words, the view of FIG. 4 is from the passenger compartment P facing the rearward direction R.

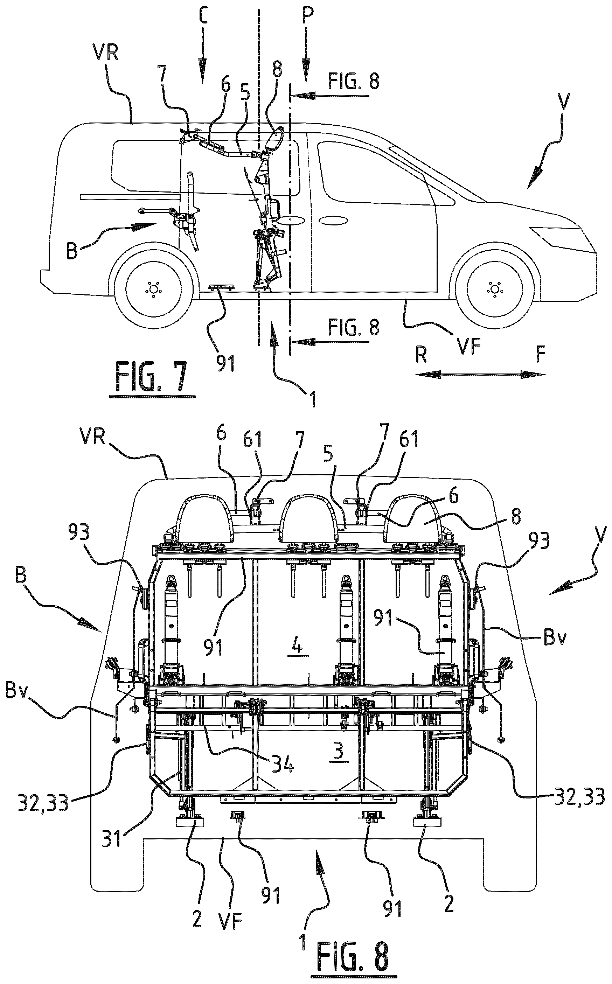

In FIG. 4 is it shown that two bases 2 may be provided for safely mounting the assembly 1 to the vehicle floor VF. Also, two support elements 7 are provided for safely mounting the assembly to the vehicle roof VR. The second ends 61 of the two guide rods 6 are inserted in a pivot hole of the support element 7. The first ends 60 of the rods 6 are pivotally connected to the brace 5. The brace 5 may be equipped with a separation panel to cover the area within its perimeter, such that passengers seated on the seating frame 3, 4 are protected from potential items that may move around in the cargo compartment C. The seating frame is also equipped with safety belts 41 to protect passengers in the case of a collision. A further safety measure is the front protection plates 30A of the seat 3, which prevent objects from moving under the seat 3 between the passenger P and cargo C compartments, and vice versa. The backrest 4 is also equipped with handles 42 that can be used to aid in the manual movement of the assembly 1 from the seating position (FIGS. 3 - 6) to the stowing position (FIGS. 7 - 10).

In the seating position, the first latch mechanisms 101 of the seat 3 are locked by the first locking elements 91 that are mounted to the vehicle floor VF. The third locking elements 93 that are mounted to the backrest 4 are located within the third latch mechanism 103, which is in this example a passive latch, as will be further elucidated below. The third latch 103 is mainly present for absorbing forces in case of a collision of the vehicle. Accordingly, the third latch 103 is connected to a brace structure B. The brace structure comprises a vertical brace Bv and a horizontal brace Bh for providing a pathway for dissipating forces in the vertical and horizontal direction, respectively. The horizontal direction is substantially in line with the front F and rear R directions of the vehicle V. In the present example, the vertical brace Bv is connected to the C-pillar of the vehicle V.

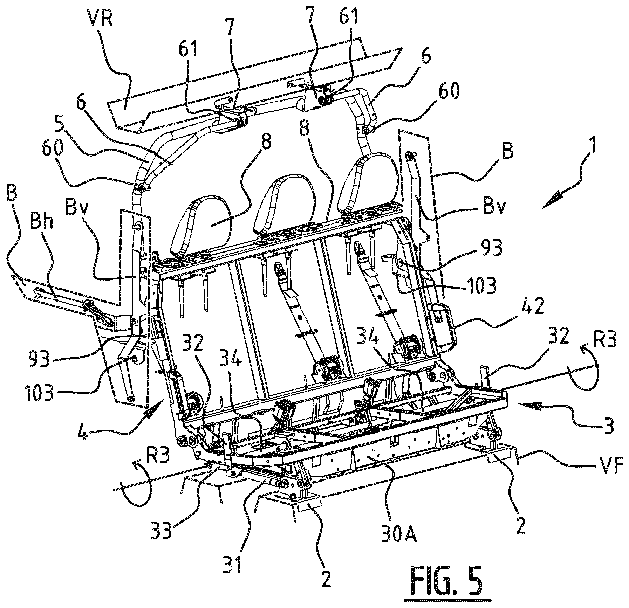

FIG. 5 shows a perspective front view of the assembly 1 of FIGS. 3 - 6. It can be see that the seat 3 is connected to a piston 31 that in turn is pivotally connected to the base 2. The piston 31 aids on the movement of the assembly from the seating position to the stowing position, thus decreasing the manual force required for said movement. In order to manually effect said movement, loops 32 are provided, that are each connected to a lever 33, which is in turn connected to a release rod 34. Pulling the loop 32 actuates the lever 33 and thereby rotates the release rod 34 about its longitudinal axis, in the rotation direction R3. It can be seen that the release rod 34 runs between each side of the assembly 1 such that it can be operated at each side by respective loops 32. The release rod 34 is coupled with the first latch mechanism 101 and the second latch mechanism 102 and is configured to release the first and second latch mechanisms 101, 102 upon rotation in the rotation direction R3. Accordingly, pulling at least one of the loops 32 results in releasing (i.e., unlocking) the first and second latch mechanisms 101, 102, such that the first and second locking elements 91, 92 are released and the pivot movement of the seat 3 and backrest 4 about the first and second pivot axes R1, R2 is allowed. In the seating position, as shown herein FIG. 5, pulling the loops 32 can also aid the movement of the assembly from the seating position to the stowing position, as the loop 32, lever 33, and release rod 34 are connected with the seat 3, such that a force thereon is also transferred to the seat 3. Accordingly, the movement can be effected by essentially one operation of the loop 32.

On the left side of FIG. 5, the brace structure B can be seen. As noted earlier, the brace structure B can comprise a vertical brace Bv and a horizontal brace Bh. The vertical brace Bv is preferably mounted on, or within the C-pillar of the vehicle V. The horizontal brace Bh is preferably connected at one end to the C-pillar, and at the other end with bodywork of the vehicle V or the D-pillar thereof. The vertical brace Bv and horizontal brace Bh can be placed between the inner bodywork and outer bodywork of the vehicle V such that they are hidden from sight without losing any functionality. The braces Bv, Bh are then coupled to the assembly 1, particularly the third latch 103 through a through-hole in the interior bodywork of the vehicle V.

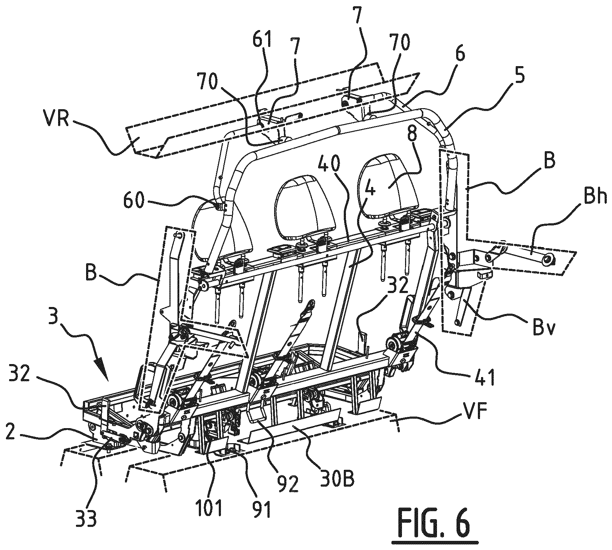

FIG. 6 shows a perspective rear view of the assembly of FIG. 5. Three rear protection plates 30B are shown, which have similar function to the aforementioned front protection plates 30A, namely preventing objects from moving under the seat 3 between the passenger P and cargo C compartments, and vice versa. Further, the second locking element 92 and second latch mechanism 102 can be seen in the rear of the assembly 1 in FIG. 6. In the present seating position of the assembly 1, these are not engaged with each other. However, they will engage with each other in the stowing position of the assembly 1, as detailed below, to lock the assembly 1 in that position. Further, in the seating position the brace 5 is in its most upright position, which is limited by bump stops 70 which are a part of the support elements 7. The bump stops 70 are for instance made of rubber.

In FIG. 7, a vehicle V is schematically depicted. The vehicle V is equipped with a stowable seating assembly 1, which is depicted here in its stowing position. The reference signs correspond to those of the previous figures. It can be seen that the base 2 and the second base 2A can be integrated into one single constructional element. In FIG. 7 the view of FIG. 8 is indicated, which is a front view of the assembly 1, as seen from within the interior of the vehicle V. In other words, the view of FIG. 8 is from the passenger compartment P facing the rearward direction R.

FIG. 8 shows a front view of the assembly 1 in the stowing position in the vehicle V. It can be seen that the seat 3 and backrest 4 are both vertically arranged and in line with each other. The first locking element 91 is not engaged with the first latch mechanism 101 in the present example when the assembly 1 is in the stowing position. In the present vehicle V, which is schematically drawn, the roof portion VR provides space for the headrests 8 in the stowing position. However, in practice, the headrests 8 may need to be folded downward, such that they point in the front direction of the vehicle V, due to lack of headspace in the cabin. In the stowing position, the second locking element 92 is engaged with the second latch mechanism 102. The third locking element 93 and third latch mechanism 103 are not engaged in the stowing position, as shown.

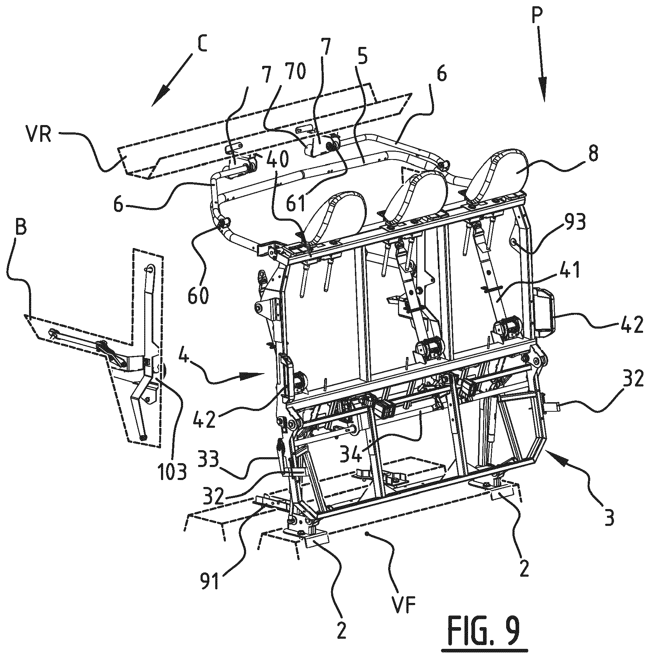

FIG. 9 shows a perspective front view of the assembly 1 of FIGS. 7 - 10. In the stowing position, the brace 5 points mostly in the rearward direction R of the vehicle V. In order to still protect the passengers by sufficiently separating the cargo compartment C from the passenger compartment P, the brace is somewhat bent near its connection with the first end 60 of the guide rod 6. Accordingly, the upper part of the brace 5 is bent towards the ceiling (i.e., vehicle roof VR), so as to cover the small space between the top portion 40 of the backrest 4, and the ceiling VR. In the stowing position, the seat 3 and backrest 4, together with the brace 5 form a barrier between the cargo compartment C and the passenger compartment P. When moving back from the stowing position to the seating position, the loops 32 can be pulled again to release the second latch mechanism 102, such that the backrest 4 can be pushed backwards with the aid of gripping the handles 42 or the like, wherein the seat 3 will follow due to the constrained rotational relationship between the components of the assembly 1. Particularly, the base 2 constrains the motion of the seat 3, which in turn constrains the motion of the backrest 4, which in term constrains the motion of the brace 5, which in turn constrains the motion of the guide rod 6, which is also constrained by the support element 7, and the other way around. Accordingly, the motion of the assembly from the seating position to the stowing position is constrained such that the components follow a predictable path, leading to a smooth, predictable and safe operation of the assembly 1.

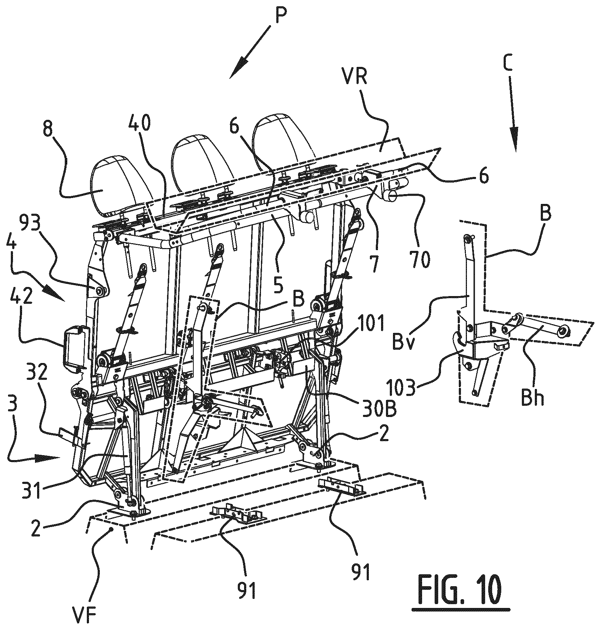

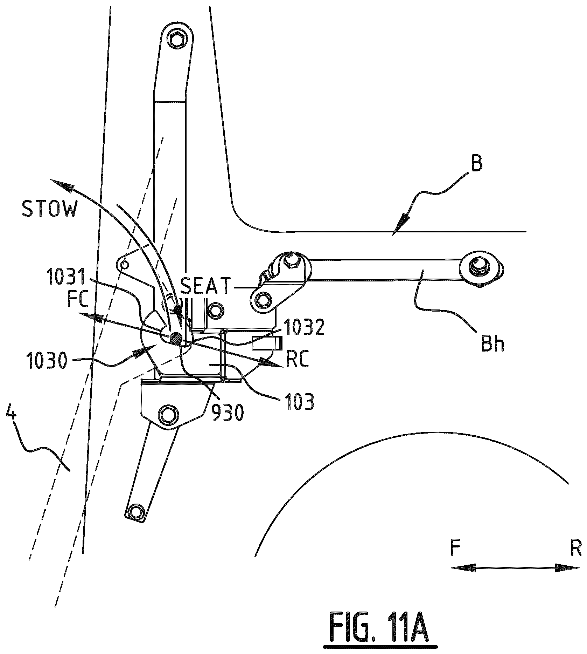

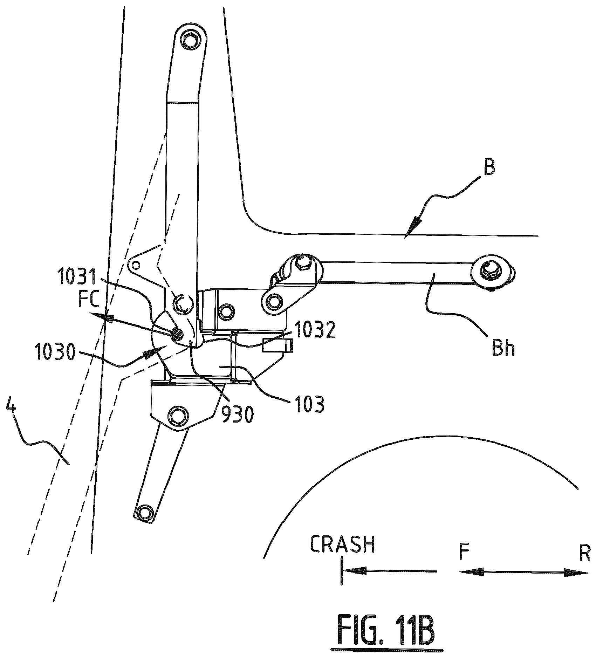

FIG. 10 shows a perspective rear view of the assembly of FIG. 9. Looking at the brace B on the right side of FIG. 10, the shape of the passive third latch 103 can be seen. The interaction between the third latch 103 and the third locking element 93 is explained in more detail with reference to FIGS. 11A and 11B. It can be seen that the brace 5 also presses the assembly 1 forwards to more securely hold it in its stowing position.

In FIGS. 11A and 11B the passive third latch 103 is shown, which is fixed to the brace structure B, of which the horizontal brace Bh is shown as extending roughly in the along the front F and rear R directions. The shown situation in FIG. 11A is the seating position SEAT of the assembly 1 in normal condition of the vehicle V. A locking bracket 930 of the third locking element 93 is shown, in cross-section, as being located in the receiving portion 1030 of the latch 103. In normal conditions, the bracket 930 of the locking element 93 can move freely in and out of the receiving portion 1030, particularly from the seating position SEAT to the stowing position STOW as indicated by the curved arrow.

As explained above, the third latch 103 is an additional safety feature, particularly for providing resistance to movement and/or deformation of the assembly 1 during a crash (i.e., collision) of the vehicle V. Particularly, in the event of a frontwards collision (i.e., crash) when the assembly 1 is in the seating position SEAT, as depicted in FIG. 11B, the bracket 930 slides in a frontward collision direction FC within the receiving portion 1030, until it reaches the front hook portion 1031 of the receiving portion 1030. The front hook portion 1031 is shaped so as to catch the bracket 930 in case of a frontward collision. Similarly, in the case of a rearward collision the bracket 930 slides in a rearward collision direction RC within the receiving portion 1030, until it reaches the rear hook portion 1032 of the receiving portion 1030. Since the bracket 930 of the third locking element 93 is attached to the assembly 1, particularly the backrest 4 in the present example, the latch 103 forms an additional support point for the assembly 1 in case of a collision of the vehicle 1, thus improving the safety of the passengers without limiting the motion of the bracket 930 when the assembly 1 is moved from the seating position SEAT to the stowing position STOW, and vice versa. The brace structure B provides efficient paths for dissipating forces applied to the latch 103.

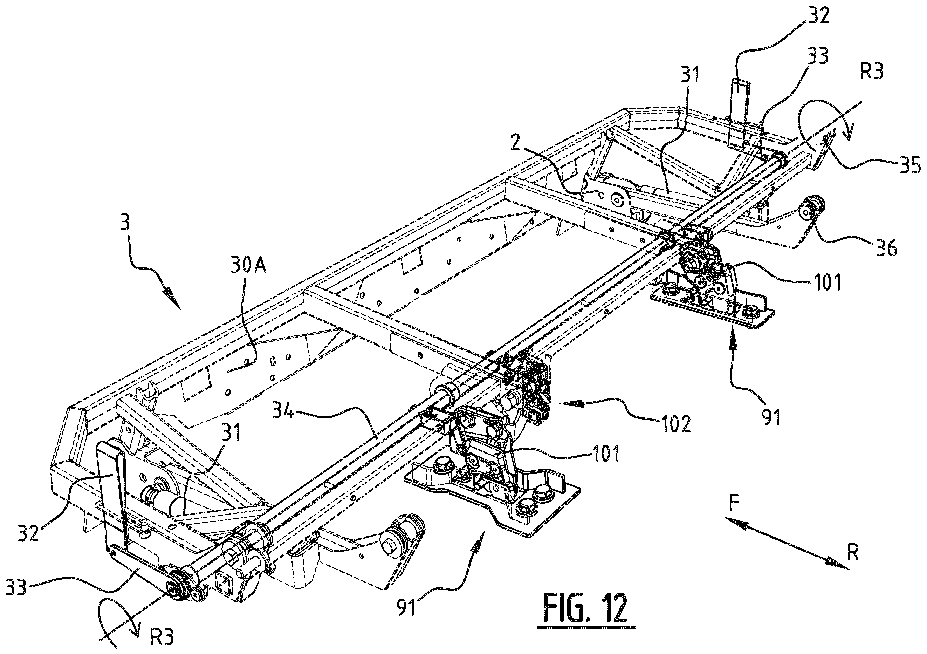

FIG. 12 shows a perspective view of the seat portion 3 of the seating frame of the stowable seating assembly 1, along with (part of) the base 2 and the first locking element 91. The base 2 and first locking elements 91 are generally fixed to the vehicle floor VF. FIG. 12 shows in more detail the mechanism for releasing the first and second latch mechanisms 101, 102. The release rod 34, as was explained above, is connected to the latch mechanisms 101, 102, and is configured to unlock these mechanisms 101, 102 by rotating in the rotation direction R3 about the longitudinal axis of the rod 34. As the rod 34 is located in the seat portion 3, which is generally covered with a seating material (any material or structure suitable for upholstering the seat portion 3 to make it comfortable for a person to sit on), a lever 33 that is external to the seat portion 3 is provided for operating the rod 34. To increase usability, a loop 32 is provided at the free end of the lever 33. Levers 33 and loops 32 are provided at each side the seat 3. On the front edge, in the forward direction F, of the seat 3, front protection plates 30A are provided, as explained above. Furthermore, pistons 31 are foreseen to aid in pivoting the seat 3 about its pivot point on the base 2. The seat 3 is shown in FIG. 12 in the seating position. Accordingly, the first latch mechanism 101 is engaged with the first locking element 91, and the second latch mechanism 102 is not engaged with the second locking element 92 (not shown in FIG. 12). The backrest 4 (not shown in FIG. 12) can be pivotally attached to the first backrest mounting point 35, which is attached to the seat 3, and the second backrest mounting point 36, which is attached to the base 2.

The illustrative embodiments or examples described above are not to be construed as limiting the scope of protection, which is determined by the appended claims.

## Claims

1. A stowable seating assembly (1) for a vehicle (V), such as a transport vehicle, the assembly (1) comprising:
a base (2) configured to be fixed to a floor (VF) of the vehicle (V);
a seating frame comprising a seat portion (3) and a backrest portion (4), wherein seat portion (3) is pivotable relative to the base (2) about a first pivot point (R1), and the backrest portion (4) and the seat portion (3) are pivotable relative to each other about a second pivot point (R2);
a brace (5) that is pivotally connected to a top portion (40) of the backrest portion (4), the brace (5) comprising a separation panel that is configured to substantially extend between the top portion (40) of the backrest portion (4) and the roof (VR) of the vehicle (V), in both the seating position and the stowing position of the assembly (1), so as to form a barrier between a rear (R) side of the assembly (1) and a front (F) side of the assembly (1);
a guiding link (6) that is pivotally connected to the brace (5) at a first end (60) of the guiding link (6);
a support element (7) configured to be fixed to the roof (VR) of the vehicle (V), wherein a second end (61) of the guiding link (6) is pivotally connected to the support element (7); and
a locking mechanism for locking the assembly (1) in either a seating position or a stowing position.

2. The assembly (1) of claim 1, wherein the locking mechanism comprises:
a seating position lock comprising a first latch mechanism (101) configured to be fixed to one of the vehicle (V), preferably the floor (VF) thereof, and the seating frame, preferably the seat portion (3) thereof, and is configured to engage with a first locking element (91) configured to be fixed to the other one of the vehicle (V), preferably the floor (VF) thereof, and the seating frame, preferably the seat portion (3) thereof, so as to prevent pivoting of the seat portion (3) about the first pivot point (R1); and/or
a stowing position lock comprising a second latch mechanism (102) fixed to one of the seat portion (3) and the backrest portion (4) and being configured to engage with a second locking element (92) fixed to the other one of the seat portion (3) and the backrest portion (4), so as to prevent pivoting of the seat portion (3) and the backrest portion (4) relative to each other about the second pivot point (R2).

3. The assembly (1) of claim 2, wherein:
in the seating position of the assembly (1), the first latch mechanism (101) is engaged with the first locking element (91), and preferably the second latch mechanism (102) is not engaged with the second locking element (92); and/or
in the stowing position of the assembly (1), the second latch mechanism (102) is engaged with the second locking element (92), and preferably the first latch mechanism (101) is not engaged with the first locking element (91); and/or
the first pivot point (R1) is located near a front (F) section of the seat portion (3), and the first latch mechanism (101) or the first locking element (91) is fixed to the seat portion (3) near a rear (R) section of thereof.

4. The assembly (1) of any of the preceding claims, wherein:
in the seating position of the assembly (1), the seat portion (3) and the backrest portion (4) are oriented such that a person can be seated thereon, preferably wherein the seat portion (3) and the backrest portion (4) define a seat angle between them, wherein the seat angle is in the range of 60 to 130 degrees; and/or
in the stowing position of the assembly (1), the seat portion (3) and the backrest portion (4) are oriented such that both are positioned substantially vertically, preferably wherein the seat portion (3) and the backrest portion (4) define a seat angle between them, wherein the seat angle is in the range of 160 to 200 degrees.

5. The assembly (1) of any of claims 2 - 4, wherein the seating position lock further comprises a third latch mechanism (103) configured to be fixed to one of the vehicle (V) and the seating frame, preferably to the backrest portion (4) thereof, and is configured to engage with a third locking element (93) fixed to the other one of the vehicle (V) and the seating frame, preferably to the backrest portion (4) thereof.

6. The assembly (1) of claim 5, wherein the third latch mechanism (103) has a receiving portion (1030) for receiving the third locking element (93) therein in the seating position of the assembly (1), the receiving portion (1030) comprising at least one hook portion (1031, 1032) configured to catch the third locking element (93) when the third locking element (93) slides forwards (FC) and/or backwards (RC) in said receiving portion (1030), preferably wherein:
the receiving portion (1030) comprises two hook portions (1031, 1032), wherein a first hook portion (1031) of the two hook portions is configured to catch the third locking element (93) when the third locking element (93) slides forwards (FC) in said receiving portion (1030), and a second hook portion (1032) of the two hook portions is configured to catch the third locking element (93) when the third locking element (93) slides backwards (RC) in said receiving portion (1030).

7. The assembly (1) of any one of claims 4 - 6, wherein the third locking element (93) or the third latch mechanism (103) is fixed to the vehicle (V) through a support brace (B) configured to transfer forces on said third locking element (93) or third latch mechanism (103) to bodywork of the vehicle (V).

8. The assembly (1) of claim 7, wherein the support brace (B) is configured to be connected to the bodywork of the vehicle (V) at a plurality of locations, preferably wherein the plurality of locations are pre-existing mounting locations on the bodywork, and/or
wherein the support brace (B) is placed between an interior bodywork panel and an exterior bodywork panel of the bodywork of the vehicle (V), preferably wherein:
a least one of the plurality of locations is located on the C-pillar or the D-pillar of the vehicle (V).

9. The assembly (1) of any of the preceding claims, further comprising a release mechanism (33, 34) for releasing the locking mechanism, preferably wherein the release mechanism (33, 34) comprises a handle (32) which is operable by a user.

10. The assembly (1) of claim 9 when dependent upon claim 2, wherein the release mechanism (33, 34) is configured for releasing the first latch mechanism (101) and/or the second latch mechanism (102).

11. The assembly (1) of claim 9 or 10, wherein the release mechanism (33, 34) comprises a rod (34) connected to the locking mechanism, wherein the rod (34) can be rotated about its longitudinal axis (R3) for locking and/or releasing the locking mechanism, preferably wherein the rod (34) can be rotated by the handle (32).

12. The assembly (1) of claim 10 or 11, wherein the release mechanism (33, 34) comprises the handle (32), and wherein pulling the handle (32) releases at least the first latch mechanism (101), and also effects the movement of the assembly (1) from the seating position to the stowing position.

13. The assembly (1) of any of the preceding claims, wherein the guiding link (6) and the brace (5) comprise blocking means configured to block movement of the guiding link (6) and the brace (5) with respect to each other in the stowing position of the assembly (1).

14. A vehicle (V), preferably a transport vehicle, comprising the stowable seating assembly (1) according to any of the preceding claims, wherein the stowable seating assembly (1) is preferably the second seating row of the vehicle (V), further preferably wherein:
the vehicle (V) is a light commercial vehicle, preferably of the double cabin type.

15. The vehicle (V) of claim 14, wherein:
the support element (7) is rigidly fixed to the roof (VR) of the vehicle (V), such that the second end (61) of the guiding link (6) pivots relative to the roof (VR) of the vehicle (V), but does not translate relative to the roof (VR) of the vehicle (V); and/or
the base (2) is rigidly fixed to the floor (VF) of the vehicle (V), such that the first pivot point does not translate relative to the floor (VF) of the vehicle (V).

## Patentansprüche

1. Verstaubare Sitzanordnung (1) für ein Fahrzeug (V), wie ein Transportfahrzeug, die Anordnung (1) umfassend:
eine Basis (2), die konfiguriert ist, um an einem Boden (VF) des Fahrzeugs (V) befestigt zu werden;
einen Sitzrahmen, umfassend einen Sitzabschnitt (3) und einen Rückenlehnenabschnitt (4), wobei der Sitzabschnitt (3) relativ zu der Basis (2) um einen ersten Schwenkpunkt (R1) herum schwenkbar ist und der Rückenlehnenabschnitt (4) und der Sitzabschnitt (3) relativ zueinander um einen zweiten Schwenkpunkt (R2) herum schwenkbar sind;
eine Strebe (5), die mit einem oberen Abschnitt (40) des Rückenlehnenabschnitts (4) schwenkbar verbunden ist, die Strebe (5) umfassend eine Trennplatte, die konfiguriert ist, um sich in sowohl der Sitzposition als auch der Verstauposition der Anordnung (1) im Wesentlichen zwischen dem oberen Abschnitt (40) des Rückenlehnenabschnitts (4) und dem Dach (VR) des Fahrzeugs (V) zu erstrecken, um eine Barriere zwischen einer hinteren (R) Seite der Anordnung (1) und einer vorderen (F) Seite der Anordnung (1) zu bilden;
ein Führungsglied (6), das an einem ersten Ende (60) des Führungsglieds (6) mit der Strebe (5) schwenkbar verbunden ist;
ein Stützelement (7), das konfiguriert ist, um an dem Dach (VR) des Fahrzeugs (V) befestigt zu werden, wobei ein zweites Ende (61) des Führungsglieds (6) mit dem Stützelement (7) schwenkbar verbunden ist; und
einen Verriegelungsmechanismus zum Verriegeln der Anordnung (1) in entweder einer Sitzposition oder einer Verstauposition.

2. Anordnung (1) nach Anspruch 1, wobei der Verriegelungsmechanismus umfasst:
eine Sitzpositionsverriegelung, umfassend einen ersten Einrastmechanismus (101), der konfiguriert ist, um an einem des Fahrzeugs (V), vorzugsweise dem Boden (VF) davon, und dem Sitzrahmen, vorzugsweise dem Sitzabschnitt (3) davon, befestigt zu werden, und der konfiguriert ist, um ein erstes Verriegelungselement (91) in Eingriff zu nehmen, das konfiguriert ist, um an dem anderen einen des Fahrzeugs (V), vorzugsweise dem Boden (VF) davon, und dem Sitzrahmen, vorzugsweise dem Sitzabschnitt (3) davon, befestigt zu werden, um ein Schwenken des Sitzabschnitts (3) um den ersten Schwenkpunkt (R1) herum zu verhindern; und/oder
eine Verstaupositionsverriegelung, umfassend einen zweiten Einrastmechanismus (102), der an einem des Sitzabschnitts (3) und des Rückenlehnenabschnitts (4) befestigt ist und der konfiguriert ist, um mit einem zweiten Verriegelungselement (92) in Eingriff zu kommen, das an dem anderen einen des Sitzabschnitts (3) und des Rückenlehnenabschnitts (4) befestigt ist, um das Schwenken des Sitzabschnitts (3) und des Rückenlehnenabschnitts (4) relativ zueinander um den zweiten Schwenkpunkt (R2) herum zu verhindern.

3. Anordnung (1) nach Anspruch 2, wobei:
in der Sitzposition der Anordnung (1), der erste Einrastmechanismus (101) mit dem ersten Verriegelungselement (91) in Eingriff steht und vorzugsweise der zweite Einrastmechanismus (102) nicht mit dem zweiten Verriegelungselement (92) in Eingriff steht; und/oder
in der Verstauposition der Anordnung (1), der zweite Einrastmechanismus (102) mit dem zweiten Verriegelungselement (92) in Eingriff steht und vorzugsweise der erste Einrastmechanismus (101) nicht mit dem ersten Verriegelungselement (91) in Eingriff steht; und/oder
der erste Schwenkpunkt (R1) nahe eines vorderen (F) Teils des Sitzabschnitts (3) gelegen ist und der erste Einrastmechanismus (101) oder das erste Verriegelungselement (91) nahe eines hinteren (R) Teils davon an dem Sitzabschnitt (3) befestigt ist.

4. Anordnung (1) nach einem der vorstehenden Ansprüche, wobei:
in der Sitzposition der Anordnung (1), der Sitzabschnitt (3) und der Rückenlehnenabschnitt (4) derart ausgerichtet sind, dass eine Person darauf sitzen kann, wobei vorzugsweise der Sitzabschnitt (3) und der Rückenlehnenabschnitt (4) zwischen sich einen Sitzwinkel definieren, wobei der Sitzwinkel in dem Bereich von 60 bis 130 Grad liegt; und/oder
in der Verstauposition der Anordnung (1), der Sitzabschnitt (3) und der Rückenlehnenabschnitt (4) derart ausgerichtet sind, dass beide im Wesentlichen vertikal positioniert sind, wobei vorzugsweise der Sitzabschnitt (3) und der Rückenlehnenabschnitt (4) zwischen sich einen Sitzwinkel definieren, wobei der Sitzwinkel in dem Bereich von 160 bis 200 Grad liegt.

5. Anordnung (1) nach einem der Ansprüche 2 bis 4, wobei die Sitzpositionsverriegelung ferner einen dritten Einrastmechanismus (103) umfasst, der konfiguriert ist, um an einem des Fahrzeugs (V) und des Sitzrahmens, vorzugsweise an dem Rückenlehnenabschnitt (4) davon, befestigt zu werden, und der konfiguriert ist, um mit einem dritten Verriegelungselement (93) in Eingriff zu kommen, das an dem anderen einen des Fahrzeugs (V) und des Sitzrahmens, vorzugsweise an dem Rückenlehnenabschnitt (4) davon, befestigt ist.

6. Anordnung (1) nach Anspruch 5, wobei der dritte Einrastmechanismus (103) einen Aufnahmeabschnitt (1030) zum Aufnehmen des dritten Verriegelungselements (93) darin in der Sitzposition der Anordnung (1) aufweist, der Aufnahmeabschnitt (1030) umfassend mindestens einen Hakenabschnitt (1031, 1032), der konfiguriert ist, um das dritte Verriegelungselement (93) zu fassen, wenn das dritte Verriegelungselement (93) in dem Aufnahmeabschnitt (1030) nach vorne (FC) und/oder nach hinten (RC) gleitet, wobei vorzugsweise:
der Aufnahmeabschnitt (1030) zwei Hakenabschnitte (1031, 1032) umfasst, wobei ein erster Hakenabschnitt (1031) der zwei Hakenabschnitte konfiguriert ist, um das dritte Verriegelungselement (93) zu fassen, wenn das dritte Verriegelungselement (93) in dem Aufnahmeabschnitt (1030) nach vorne (FC) gleitet, und ein zweiter Hakenabschnitt (1032) der zwei Hakenabschnitte konfiguriert ist, um das dritte Verriegelungselement (93) zu fassen, wenn das dritte Verriegelungselement (93) in dem Aufnahmeabschnitt (1030) nach hinten (RC) gleitet.

7. Anordnung (1) nach einem der Ansprüche 4 bis 6, wobei das dritte Verriegelungselement (93) oder der dritte Einrastmechanismus (103) über eine Stützstrebe (B) an dem Fahrzeug (V) befestigt ist, die konfiguriert ist, um Kräfte auf dem dritten Verriegelungselement (93) oder dem dritten Einrastmechanismus (103) auf die Karosserie des Fahrzeugs (V) zu übertragen.

8. Anordnung (1) nach Anspruch 7, wobei die Stützstrebe (B) konfiguriert ist, um an einer Vielzahl von Stellen mit der Karosserie des Fahrzeugs (V) verbunden zu werden, wobei vorzugsweise die Vielzahl von Stellen bereits vorhandene Montagestellen an der Karosserie sind und/oder
wobei die Stützstrebe (B) zwischen einer inneren Karosserieplatte und einer äußeren Karosserieplatte der Karosserie des Fahrzeugs (V) platziert ist, wobei vorzugsweise:
mindestens eine der Vielzahl von Stellen an der C-Säule oder der D-Säule des Fahrzeugs (V) gelegen ist.

9. Anordnung (1) nach einem der vorstehenden Ansprüche, ferner umfassend einen Lösemechanismus (33, 34) zum Lösen des Verriegelungsmechanismus, wobei der Lösemechanismus (33, 34) vorzugsweise einen Griff (32) umfasst, der durch einen Benutzer betätigbar ist.

10. Anordnung (1) nach Anspruch 9, wenn von Anspruch 2 abhängig, wobei der Lösemechanismus (33, 34) zum Lösen des ersten Einrastmechanismus (101) und/oder des zweiten Einrastmechanismus (102) konfiguriert ist.

11. Anordnung (1) nach Anspruch 9 oder 10, wobei der Lösemechanismus (33, 34) eine Stange (34), die mit dem Verriegelungsmechanismus verbunden ist, umfasst, wobei die Stange (34) zum Verriegeln und/oder Lösen des Verriegelungsmechanismus um ihre Längsachse (R3) herum gedreht werden kann, wobei vorzugsweise die Stange (34) durch den Griff (32) gedreht werden kann.

12. Anordnung (1) nach Anspruch 10 oder 11, wobei der Lösemechanismus (33, 34) den Griff (32) umfasst und wobei ein Ziehen des Griffs (32) mindestens den ersten Einrastmechanismus (101) löst und ebenso die Bewegung der Anordnung (1) von der Sitzposition in die Verstauposition bewirkt.

13. Anordnung (1) nach einem der vorstehenden Ansprüche, wobei das Führungsglied (6) und die Strebe (5) Blockiermittel umfassen, die konfiguriert sind, um die Bewegung des Führungsglieds (6) und der Strebe (5) in Bezug aufeinander in der Verstauposition der Anordnung (1) zu blockieren.

14. Fahrzeug (V), vorzugsweise ein Transportfahrzeug, umfassend die verstaubare Sitzanordnung (1) nach einem der vorstehenden Ansprüche, wobei die verstaubare Sitzanordnung (1) vorzugsweise die zweite Sitzreihe des Fahrzeugs (V) ist, wobei ferner vorzugsweise:
das Fahrzeug (V) ein leichtes Nutzfahrzeug, vorzugsweise des Doppelkabinentyps, ist.

15. Fahrzeug (V) nach Anspruch 14, wobei:
das Stützelement (7) an dem Dach (VR) des Fahrzeugs (V) derart starr befestigt ist, dass das zweite Ende (61) des Führungsglieds (6) relativ zu dem Dach (VR) des Fahrzeugs (V) schwenkt, sich jedoch nicht relativ zu dem Dach (VR) des Fahrzeugs (V) verschiebt; und/oder
die Basis (2) an dem Boden (VF) des Fahrzeugs (V) derart starr befestigt ist, dass sich der erste Schwenkpunkt nicht relativ zu dem Boden (VF) des Fahrzeugs (V) verschiebt.

## Revendications

1. Ensemble (1) de sièges escamotables pour un véhicule (V), tel qu'un véhicule de transport, l'ensemble (1) comprenant :
une base (2) conçue pour être fixée à un plancher (VF) du véhicule (V) ;
un cadre de siège comprenant une partie siège (3) et une partie dossier (4), dans lequel la partie siège (3) peut pivoter relativement à la base (2) autour d'un premier point de pivotement (R1), et la partie dossier (4) et la partie siège (3) peuvent pivoter l'une relativement à l'autre autour d'un second point de pivotement (R2) ;
une entretoise (5) qui est reliée de manière pivotante à une partie supérieure (40) de la partie dossier (4), l'entretoise (5) comprenant un panneau de séparation qui est conçu pour s'étendre sensiblement entre la partie supérieure (40) de la partie dossier (4) et le toit (VR) du véhicule (V), dans à la fois la position de siège et la position d'escamotage de l'ensemble (1), de sorte à former une barrière entre un côté arrière (R) de l'ensemble (1) et un côté avant (F) de l'ensemble (1) ;
un lien de guidage (6) qui est relié de manière pivotante à l'entretoise (5) au niveau d'une première extrémité (60) du lien de guidage (6) ;
un élément de support (7) conçu pour être fixé au toit (VR) du véhicule (V), dans lequel une seconde extrémité (61) du lien de guidage (6) est reliée de manière pivotante à l'élément de support (7) ; et
un mécanisme de verrouillage pour le verrouillage de l'ensemble (1) soit dans une position de siège soit dans une position d'escamotage.

2. Ensemble (1) selon la revendication 1, dans lequel le mécanisme de verrouillage comprend :
un verrou de position de siège comprenant un premier mécanisme de loquet (101) conçu pour être fixé à l'un parmi le véhicule (V), de préférence le plancher (VF) de celui-ci, et le cadre de siège, de préférence la partie siège (3) de celui-ci, et est conçu pour mettre en prise un premier élément de verrouillage (91) conçu pour être fixé à l'autre parmi le véhicule (V), de préférence le plancher (VF) de celui-ci, et le cadre de siège, de préférence la partie siège (3) de celui-ci, de sorte à empêcher le pivotement de la partie siège (3) autour du premier point de pivotement (R1) ; et/ou
un verrou de position d'escamotage comprenant un deuxième mécanisme de verrouillage (102) fixé à l'une parmi la partie siège (3) et la partie dossier (4) et étant conçu pour mettre en prise un deuxième élément de verrouillage (92) fixé à l'autre parmi la partie siège (3) et la partie dossier (4), de sorte à empêcher le pivotement de la partie siège (3) et de la partie dossier (4) l'une relativement à l'autre autour du second point de pivotement (R2).

3. Ensemble (1) selon la revendication 2, dans lequel :
dans la position de siège de l'ensemble (1), le premier mécanisme de loquet (101) est mis en prise avec le premier élément de verrouillage (91), et de préférence le deuxième mécanisme de loquet (102) n'est pas mis en prise avec le deuxième élément de verrouillage (92) ; et/ou
dans la position d'escamotage de l'ensemble (1), le deuxième mécanisme de loquet (102) est mis en prise avec le deuxième élément de verrouillage (92), et de préférence le premier mécanisme de loquet (101) n'est pas mis en prise avec le premier élément de verrouillage (91) ; et/ou
le premier point de pivotement (R1) est situé près d'une section avant (F) de la partie siège (3), et le premier mécanisme de loquet (101) ou le premier élément de verrouillage (91) est fixé à la partie siège (3) près d'une section arrière (R) de celle-ci.

4. Ensemble (1) selon l'une quelconque des revendications précédentes, dans lequel :
dans la position de siège de l'ensemble (1), la partie siège (3) et la partie dossier (4) sont orientées de telle sorte qu'une personne peut être assise sur celui-ci, de préférence dans lequel la partie siège (3) et la partie dossier (4) définissent un angle de siège entre elles, dans lequel l'angle de siège est dans la plage de 60 à 130 degrés ; et/ou
dans la position d'escamotage de l'ensemble (1), la partie siège (3) et la partie dossier (4) sont orientées de telle sorte que les deux sont positionnées sensiblement verticalement, de préférence dans lequel la partie siège (3) et la partie dossier (4) définissent un angle de siège entre elles, dans lequel l'angle de siège est dans la plage de 160 à 200 degrés.

5. Ensemble (1) selon l'une quelconque des revendications 2 à 4, dans lequel le verrou de position de siège comprend en outre un troisième mécanisme de loquet (103) conçu pour être fixé à l'un parmi le véhicule (V) et le cadre de siège, de préférence à la partie dossier (4) de celui-ci, et est conçu pour mettre en prise un troisième élément de verrouillage (93) fixé à l'autre parmi le véhicule (V) et le cadre de siège, de préférence à la partie dossier (4) de celui-ci.

6. Ensemble (1) selon la revendication 5, dans lequel le troisième mécanisme de loquet (103) a une partie de réception (1030) pour la réception du troisième élément de verrouillage (93) dans celui-ci dans la position de siège de l'ensemble (1), la partie de réception (1030) comprenant au moins une partie crochet (1031, 1032) conçue pour attraper le troisième élément de verrouillage (93) lorsque le troisième élément de verrouillage (93) glisse vers l'avant (FC) et/ou vers l'arrière (RC) dans ladite partie de réception (1030), de préférence dans lequel :
la partie de réception (1030) comprend deux parties crochets (1031, 1032), dans lequel une première partie crochet (1031) des deux parties crochets est conçue pour attraper le troisième élément de verrouillage (93) lorsque le troisième élément de verrouillage (93) glisse vers l'avant (FC) dans ladite partie de réception (1030), et une seconde partie crochet (1032) des deux parties crochets est conçue pour attraper le troisième élément de verrouillage (93) lorsque le troisième élément de verrouillage (93) glisse vers l'arrière (RC) dans ladite partie de réception (1030).

7. Ensemble (1) selon l'une quelconque des revendications 4 à 6, dans lequel le troisième élément de verrouillage (93) ou le troisième mécanisme de loquet (103) est fixé au véhicule (V) à travers une entretoise de support (B) conçue pour transférer des forces sur ledit troisième élément de verrouillage (93) ou troisième mécanisme de loquet (103) à la carrosserie du véhicule (V).

8. Ensemble (1) selon la revendication 7, dans lequel l'entretoise de support (B) est conçue pour être reliée à la carrosserie du véhicule (V) au niveau d'une pluralité d'emplacements, de préférence dans lequel la pluralité d'emplacements sont des emplacements de montage préexistants sur la carrosserie, et/ou
dans lequel l'entretoise de support (B) est placée entre un panneau de carrosserie intérieur et un panneau de carrosserie extérieur de la carrosserie du véhicule (V), de préférence dans lequel :
au moins l'un de la pluralité d'emplacements est situé sur le montant C ou le montant D du véhicule (V).

9. Ensemble (1) selon l'une quelconque des revendications précédentes, comprenant en outre un mécanisme de libération (33, 34) pour la libération du mécanisme de verrouillage, de préférence dans lequel le mécanisme de libération (33, 34) comprend une poignée (32) qui peut être actionnée par un utilisateur.

10. Ensemble (1) selon la revendication 9 prise en dépendance de la revendication 2, dans lequel le mécanisme de libération (33, 34) est conçu pour la libération du premier mécanisme de loquet (101) et/ou du second mécanisme de loquet (102).

11. Ensemble (1) selon la revendication 9 ou 10, dans lequel le mécanisme de libération (33, 34) comprend une tige (34) reliée au mécanisme de verrouillage, dans lequel la tige (34) peut être mise en rotation autour de son axe longitudinal (R3) pour le verrouillage et/ou la libération du mécanisme de verrouillage, de préférence dans lequel la tige (34) peut être mise en rotation par la poignée (32).

12. Ensemble (1) selon la revendication 10 ou 11, dans lequel le mécanisme de libération (33, 34) comprend la poignée (32), et dans lequel le tirage sur la poignée (32) libère au moins le premier mécanisme de loquet (101), et provoque également le mouvement de l'ensemble (1) de la position de siège à la position d'escamotage.

13. Ensemble (1) selon l'une quelconque des revendications précédentes, dans lequel le lien de guidage (6) et l'entretoise (5) comprennent des moyens de blocage conçus pour bloquer le mouvement du lien de guidage (6) et de l'entretoise (5) l'un par rapport à l'autre dans la position d'escamotage de l'ensemble (1).

14. Véhicule (V), de préférence un véhicule de transport, comprenant l'ensemble (1) de sièges escamotables selon l'une quelconque des revendications précédentes, dans lequel l'ensemble (1) de sièges escamotables est de préférence la seconde rangée de sièges du véhicule (V), de préférence en outre dans lequel :
le véhicule (V) est un véhicule utilitaire léger, de préférence du type à double cabine.

15. Véhicule (V) selon la revendication 14, dans lequel :
l'élément de support (7) est rigidement fixé au toit (VR) du véhicule (V), de telle sorte que la seconde extrémité (61) du lien de guidage (6) pivote relativement au toit (VR) du véhicule (V), mais ne se translate pas relativement au toit (VR) du véhicule (V) ; et/ou
la base (2) est rigidement fixée au plancher (VF) du véhicule (V), de telle sorte que le premier point de pivotement ne se translate pas relativement au plancher (VF) du véhicule (V).
